# EUROPÄISCHE PATENTSCHRIFT

(11) **EP 1 514 060 B1**
(45) Veröffentlichungstag und Bekanntmachung des Hinweises auf die Patenterteilung: **24.01.2007**
(21) Anmeldenummer: 02754271.1
(22) Anmeldetag: 28.05.2002
(51) Int. Cl.: F24J 2/38, F24J 2/54, H01L 31/042

(54) **SELBSTTÄTIG WIRKENDE SONNENSTANDSNACHFÜHREINRICHTUNG**
DEVICE THAT AUTOMATICALLY TRACKS THE POSITION OF THE SUN
DISPOSITIF D'ORIENTATION AUTOMATIQUE SUIVANT LA POSITION DU SOLEIL

(43) Veröffentlichungstag der Anmeldung: 16.03.2005
(73) Patentinhaber: Fengler, Giselher, 40699 Erkrath (DE)
(72) Erfinder: JANUS, Elfi, 47877 Willich (DE); BERGER, Wolfram, 56072 Koblenz (DE)
(74) Vertreter: Hauck, Graalfs, Wehnert, Döring, Siemons
(86) Internationale Anmeldenummer: PCT/DE2002/002328
(87) Internationale Veröffentlichungsnummer: WO 2003/102477

(56) Entgegenhaltungen:
- EP-A- 0 004 468
- EP-A- 1 063 707
- WO-A-95/00806
- AU-B- 597 299
- DE-A- 3 047 724
- DE-A- 10 059 721
- FR-A- 2 798 718
- US-A- 4 195 905

## Beschreibung

Die vorliegende Erfindung betrifft eine selbsttätig wirkende Sonnenstandsnachführeinrichtung für Solarmodule.

Es ist bekannt, Solarmodule (Solarkollektoren, Solarpaneele etc.) dem Stand der Sonne nachzuführen, um eine optimale Bestrahlung mit Sonnenlicht zu ermöglichen. Wünschenswert ist normalerweise ein senkrechtes Auftreffen von Sonnenlicht auf die Ebene des Solarmoduls, was die optimale Energieausbeute sichert. Ist dies nicht der Fall, d.h. treffen Sonnenstrahlen unter einem geringeren Winkel oder unter einem größeren Winkel als 90° auf die Ebene des Solarmoduls, ist die Energieausbeute geringer.

Da, je nach Tageszeit, unterschiedlich große Einfallswinkel der Sonnenstrahlen vorhanden sind, muß der Solarmodul dem Sonnenstand nachgeführt werden. Dies kann manuell durchgeführt werden, was jedoch umständlich und zeitaufwendig ist. Es sind jedoch auch schon selbsttätig wirkende Sonnenstandsnachführeinrichtungen für Solarmodule bekannt (siehe dazu beispielsweise die Druckschritt FR-2 798 718), bei denen der Sonnenstand über einen Sensor erfaßt wird, in Abhängigkeit hiervon entsprechende Signale erzeugt und einer Steuereinheit zugeführt werden und die Steuereinheit in Abhängigkeit von diesen Signalen entsprechende Antriebseinheiten für den Solarmodul ansteuert, um diesen in die optimale Stellung relativ zur Sonne zu bewegen.

Der vorliegenden Erfindung liegt die Aufgabe zugrunde, eine selbsttätig wirkende Sonnenstandsnachführeinrichtung für Solarmodule zu schaffen, die sich durch eine kompakte und robuste Bauweise bei geringem Wartungsbedarf auszeichnet.

Diese Aufgabe wird erfindungsgemäß gelöst durch eine selbsttätig wirkende Sonnenstandsnachführeinrichtung für Solarmodule mit den Merkmalen des Anspruchs 1.

Mit der erfindungsgemäß ausgebildeten Sonnenstandsnachführeinrichtung ist es möglich, ein oder mehrere Solarmodule (Solarkollektoren, Solarpaneele) um eine Vertikalachse zu drehen und um eine Horizontalachse zu verschwenken. Hierdurch können der oder die Solarmodule jeweils in eine Stellung gebracht werden, in der die Sonnenstrahlen im wesentlichen vertikal auf die Ebene der Module auftreffen, so daß auf diese Weise eine optimale Energieumwandlung (in elektrischen Strom) erreicht werden kann. Die Bewegung des Solarmoduls oder der Solarmodule erfolgt dabei selbsttätig in Abhängigkeit vom Sonnenstand, wobei ein Optosensor den Stand der Sonne erfaßt, entsprechende Signale erzeugt und diese der Steuereinheit zuführt. Die Steuereinheit steuert den Dreh- und/oder Schwenkantrieb an, die die erforderlichen Bewegungen des Solarmoduls oder der Solarmodule um die Vertikalachse und/oder Horizontalachse zur Sonnenstandsnachführung erzeugen.

Die erfindungsgemäß ausgebildete Sonnenstandsnachführeinrichtung kann an einem stationären oder einem beweglichen Teil befestigt werden. Auf besonders bevorzugte Weise dient sie zur Befestigung an einem Fahrzeug, beispielsweise einem Wohnwagen oder einem Wohnmobil, insbesondere auf dem Dach desselben. Der Solarmodul oder die Solarmodule können dabei die Stromversorgung des Wohnmobils oder Wohnwagens übernehmen.

Die erfindungsgemäß ausgebildete Sonnenstandsnachführeinrichtung hat einen Unterbau zur Befestigung am stationären oder beweglichen Teil und einen auf dem Unterbau drehbar gelagerten und über einen Drehantrieb angetriebenen Drehteller. Mit Hilfe des Drehantriebs, der von der Steuereinheit angesteuert wird, erfolgt eine Drehbegung des Drehtellers und somit des Solarmoduls oder der Solarmodule um eine vertikale Drehachse. Auf dem Drehteller befindet sich ein Schwenkgestell, das aufgeschwenkt werden kann und über einen Schwenkantrieb in die entsprechende Schwenkstellung gebracht wird. Am Schwenkgestell sind der Solarmodul oder die Solarmodule befestigt. Das Schwenkgestell kann aus einer Stellung parallel zum Drehteller (mit einem Schwenkwinkel von 0°) bis in eine aufgeschwenkte Stellung von etwa 90° und wieder zurück bewegt werden.

Grundsätzlich hat das Schwenkgestell ein fest mit dem Drehteller verbundenes Element und ein hieran verschwenkbar gelagertes Schwenkelement, das den Solarmodul oder die Solarmodule trägt. Wesentlich ist dabei, daß der Schwenkantrieb, der im Endbereich des fest mit dem Drehteller verbundenen Elementes angeordnet ist, und zwar in dem Endbereich, in dem das Schwenklager zwischen beiden Elementen vorgesehen ist, im wesentlichen nicht über die Oberseite des fest mit dem Drehteller verbundenen Elementes hinausragt, damit über die gesamte Länge der Elemente Solarmodule angeordnet werden können und insgesamt eine niedrige Bauhöhe erreicht wird, bei der im zusammengeschwenkten Zustand keine mechanischen Teile nach oben vorstehen. Hierdurch kann die gesamte Fläche über den Elementen zur Anbringung von Solarmodulen ausgenutzt werden, und es treten geringe Momente beim Aufschwenken auf. Des weiteren werden hierdurch die an der Einrichtung angreifenden Windkräfte reduziert, was insbesondere bei der Anbringung der Sonnenstandsnachführeinrichtung auf dem Dach eines Fahrzeuges von Bedeutung ist.

Diese gewünschte kompakte Bauweise wird insbesondere durch Ausgestaltung und Anordnung des Schwenkantriebs erreicht. Der Schwenkantrieb ist am fest mit dem Drehteller verbundenen Element quer zu dessen Achse (Längsachse) gelagert und umfaßt einen Motor, ein Untersetzungsgetriebe und eine mit einer Verzahnung versehene Getriebeabtriebswelle, mit der ein mit dem Schwenkelement des Schwenkgestells verbundenes Sektorzahnrad kämmt. Das Sektorzahnrad ist dabei so ausgebildet und angeordnet, daß es das Schwenkelement nicht nach oben überragt. Dies wäre bei einem normal ausgebildeten Zahnrad mit Vollkreis der Fall.

Bei Ansteuerung des Motors (E-Motors) des Schwenkantriebs wird dessen Welle in Umdrehungen versetzt. Durch das verwendete Getriebe erfolgt eine Untersetzung, vorzugsweie etwa im Verhältnis von 1:180. Die Getriebeabtriebswelle dreht sich daher wesentlich langsamer als die Motorwelle und verschwenkt das mit ihr kämmende Sektorzahnrad und damit das Schwenkelement mit dem daran befestigten Solarmodul (Solarmodulen).

Das Sektorzahnrad überspannt vorzugsweise einen Bogen von etwa 120°, d.h. einen Drittelkreis. Hiermit kann die gewünschte Verschwenkung des Schwenkelementes um mindestens 90° erreicht werden, ohne daß das Sektorzahnrad nach oben über die Elemente vorsteht und die Anbringung von Solarmodulen in diesem Bereich unmöglich macht.

In weiterbildung der Erfindung ist das Schwenkelement mit Sektorzahnrad zwischen zwei fest mit dem Drehteller verbundenen Elementen aufschwenkbar gelagert. Auf diese Weise erfolgt eine beidseitige Lagerung des Schwenkelementes mit Sektorzahnrad und somit eine robuste Anordnung desselben. Motor, Untersetzungsgetriebe und Getriebeabtriebswelle sind zweckmäßigerweise an zwei fest mit Drehteller verbundenen Elementen gelagert, die zwischen sich die Verzahnung der Getriebeabtriebswelle aufweisen. Auch hierdurch wird eine robuste Ausgestaltung des Schwenkantriebs erreicht.

Bei dem fest mit dem Drehteller verbundenen Element und dem Schwenkelement kann es sich beispielsweise um plattenförmige oder um stab- bzw. stangenförmige Elemente handeln. Die Quererstreckung dieser Elemente unterliegt keiner Beschränkung. Das Schwenkgestell erstreckt sich im Normalfall seitlich über den Drehteller hinaus. Bei einer bevorzugten Ausführungsform sind die Elemente als Stangen ausgebildet, d.h. das Schwenkgestell umfaßt hierbei mindestens eine fest mit dem Drehteller verbundene Stange und mindestens eine Schwenkstange. Bei einer speziellen Ausführungsform umfaßt die Einrichtung insgesamt vier fest mit dem Drehteller verbundene Stangen, von denen die beiden äußeren jeweils schwenkbar mit einer Schwenkstange und die beiden inneren mit der das Sektorzahnrad aufweisenden Schwenkstange aufschwenkbar verbunden sind. An den Schwenkstangen sind insbesondere zwei Solarpaneele befestigt, die die Verbindung zwischen der angetriebenen Schwenkstange (mit dem Sektorzahnrad versehenen Schwenkstange) und den beiden anderen Schwenkstangen herstellen.

Schwenkgestell, Schwenkantrieb und Drehteller bilden somit eine drehbar auf dem Unterbau gelagerte Einheit. Vorzugsweise ist der Drehteller mittels in einer Ringnut angeordneten Kugeln auf dem Unterbau drehbar gelagert.

Der Unterbau setzt sich vorzugsweise aus einer Bodenplatte, einem darauf angeordneten Gehäuse und einem darauf angeordneten festen Teller zur Lagerung des Drehtellers zusammen. Die Ringnut ist dabei hälftig im festen Teller und im Drehteller angeordnet. Die Bodenplatte kann beispielsweise durch Verschrauben, Verkleben etc. mit dem Dach eines Fahrzeuges (Wohnmobiles, Wohnwagens) verbunden werden. Im auf der Bodenplatte angeordneten Gehäuse ist zweckmäßigerweise der Drehantrieb untergebracht, der einen Motor (E-Motor), ein Untersetzungsgetriebe und eine Antriebsschnecke aufweist, die mit einem Antriebszahnrad für den Drehteller kämmt. Das Antriebszahnrad ist mit einer Hohlnabe verbunden, die sich durch den festen Teller erstreckt und mit dem Drehteller verbunden ist.

Sowohl für den Drehantrieb als auch für den Schwenkantrieb sind geeignete Endschalter vorgesehen, die den Dreh- bzw. Schwenkwinkel begrenzen.

Der Optosensor ist vorzugsweise am Solarmodul (Solarpaneel) angeordnet. Vorzugsweise trägt das Schwenkgestell zwei Solarpaneele, von denen das in der Schwenkstellung obere den Optosensor trägt. Der Optosensor und die Endschalter für den Drehantrieb und Schwenkantrieb liefern entsprechende Signale an eine Steuereinheit (CPU), die die beiden Motoren für den Schwenkantrieb und Drehantrieb ansteuert sowie in Wirkverbindung mit einem Bedienungspaneel mit Anzeige steht, das zumindest ein manuelles Ein- und Ausschalten der Einrichtung ermöglicht und beispielsweise eine Anzeige mit Leuchtdioden besitzt, die die korrekte Stellung der Einrichtung relativ zum Stand der Sonne anzeigt.

Der Optosensor ermöglicht bei einer einfachen und kompakten Bauweise eine besonders genaue Erfassung des Sonnenstandes. Er besitzt vorzugsweise die folgenden Bestandteile:
einen Unterbau,
eine auf dem Unterbau angeordnete Trenneinrichtung, die den Raum über dem Unterbau in mehrere oben und seitlich offene Abteile unterteilt,
mindestens eine Lichtempfangseinrichtung in jedem Abteil, die Licht in elektrischen Strom umwandelt, und
an die Lichtempfangseinrichtungen angeschlossene und zu einer Steuer/Auswerte/Anzeigeeinheit führende elektrische Leitungen.

Diese Ausgestaltung basiert auf dem Gedanken, mit der auf dem Unterbau angeordneten Trenneinrichtung eine Einrichtung vorzusehen, die in Abhängigkeit vom Sonnenstand Schatten wirft, der ein Abteil oder mehrere Abteile und somit die in jedem Abteil angeordnete mindestens eine Lichtempfangseinrichtung bedeckt. Je nach Stand der Sonne kann daher die Trenneinrichtung überhaupt keinen Schatten erzeugen, wenn die Sonne genau senkrecht über dem Sensor und damit der Trenneinrichtung steht oder wenn ansonsten gleichmäßige Lichtbedingungen vorhanden sind, wie beispielsweise in der Nacht, bei diffusem Licht etc., oder die Trenneinrichtung kann Schatten werfen, wenn ihre Längsachse mit der dem Sonnenstand entsprechenden Achse einen Winkel bildet. In diesem Fall werden ein oder mehrere Abteile und damit die entsprechenden Lichtempfangseinrichtungen der zugehörigen Abteile durch den von der Trenneinrichtung erzeugten Schatten bedeckt und erzeugen somit keine elektrischen Signale, während die anderen Abteile und zugehörigen Lichtempfangseinrichtungen schattenfrei sind und elektrische Signale erzeugen.

Die elektrischen Signale werden einer Steuereinheit zugeführt, die in Abhängigkeit von den empfangenen Signalen den Drehantrieb und/oder Schwenkantrieb betätigt, welche den Solarmodul relativ zum Sonnenstand nachführen, d.h. in eine optimale Stellung zur Sonne bringen, in der die Sonnenstrahlen etwa senkrecht auf die Solarmodulfläche (Solarpaneelfläche) auftreffen. Es versteht sich, daß die entsprechenden elektrischen Signale in geeigneter Weise ausgewertet werden, bevor sie ihre Steuerfunktionen erfüllen.

Ist der Sensor und damit die Trenneinrichtung beispielsweise so ausgerichtet, daß die Achse des Sensors und der Trenneinrichtung beim höchsten Stand der Sonne (zwölf Uhr mittags) genau parallel zu den Sonnenstrahlen verläuft, sind in diesem Fall bei entsprechender Sonnenbestrahlung sämtliche Lichtempfangseinrichtungen in Betrieb und zeigen den optimalen Sonnenstand an. Eine Bewegung eines entsprechenden Solarmoduls ist daher nicht erforderlich. Ändert sich nunmehr der Winkel der Sonneneinstrahlung relativ zur Achse des Sensors, wirft die Trenneinrichtung auf ein oder mehrere Abteile Schatten, so daß ein oder mehrere Lichtempfangseinrichtungen außer Betrieb gesetzt werden, was, wie vorstehend erläutert, angezeigt wird oder zu einer Nachführung des entsprechenden Solarmoduls führt, bis wieder die optimale Stellung erreicht ist.

Vorzugsweise unterteilt die Trenneinrichtung den Raum über dem Unterbau in vier Abteile. Sie bildet ein sogenanntes "Schattenkreuz", mit dem in bezug auf die Funktionsfähigkeit des Sensors besonders gute Ergebnisse erzielt wurden.

Zweckmäßigerweise ist in jedem Abteil eine Lichtempfangseinrichtung angeordnet. Diese Anordnung ist ausreichend, um für eine ausreichend genaue Anzeige und Steuerung zu sorgen.

Als Lichtempfangseinrichtung findet vorzugsweise eine Photodiode Verwendung.

Für die Praxis hat sich eine Ausführungsform als besonders geeignet erwiesen, bei der der Sensor einen im Horizontalschnitt etwa quadratischen Unterbau und eine Trenneinrichtung mit entlang den Diagonalen des Unterbaus angeordneten Wänden besitzt. Die Trenneinrichtung bildet daher ein "Schattenkreuz", das im Horizontalschnitt etwa einem Andreaskreuz entspricht. Es werden vier dreieckförmige Abteile gebildet, in denen sich jeweils eine Photodiode im geeigneten Abstand von den Wänden des Schattenkreuzes befindet. Die Photodioden sind auf dem Unterbau fixiert, wobei sich die entsprechenden elektrischen Leitungen innerhalb des Unterbaus vereinigen und über ein elektrisches Kabel aus dem Unterbau herausgeführt werden. Das Kabel steht mit einer geeigneten Steuer/Auswerte/Anzeigeeinheit in Verbindung.

Der Sensor ist hierbei zweckmäßigerweise am dreh- und schwenkbeweglich angeordneten Solarmodul selbst vorgesehen, d.h. er wird jeweils in die optimale Stellung des Solarmoduls relativ zur Sonne mitbewegt. Hierdurch entspricht die Stellung des Sensors immer exakt der Stellung des Solarmoduls.

Generell bleibt festzuhalten: Werden sämtliche Lichtempfangseinrichtungen gleich hell beleuchtet (bei Sonnenbestrahlung, Streulicht, nachts), erzeugt die zugehörige Steuereinheit keine Befehle zum Nachführen des Solarmoduls. Derartige Steuerbefehle werden nur dann erzeugt, wenn Helligkeitsdifferenzen zwischen den einzelnen Abteilen (Lichtempfangseinrichtungen) auftreten. Tritt eine derartige Differenz auf, werden vorzugsweise beide Antriebe, d.h. der Drehantrieb und Schwenkantrieb angesteuert (im Zickzacklauf), um einen senkrechten Sonnenstand zu erreichen. Eine solche Steuereinheit ist vorzugsweise mit einer Einrichtung zur Schwingungsunterdrückung versehen, um ein permanentes Hin- und Herfahren der Antriebe zu vermeiden.

Die Erfindung wird nachfolgend anhand eines Ausführungsbeispieles in Verbindung mit der Zeichnung im einzelnen erläutert. Es zeigen:
- Figur 1: einen Vertikalschnitt durch eine selbsttätig wirkende Sonnenstandsnachführeinrichtung für Solarmodule;
- Figur 2: eine Draufsicht auf das Gehäuse der Einrichtung der Figur 1 mit entferntem Überbau;
- Figur 3: eine Draufsicht auf die Einrichtung der Figuren 1 und 2;
- Figur 4: eine Detailansicht eines Teils des Schwenkantriebs;
- Figur 5: eine schematische Seitenansicht eines Optosensors zur Erfassung des Sonnenstandes;
- Figur 6: eine Draufsicht auf den Sensor der Figur 5; und
- Figur 7: ein Blockschaltbild einer Sonnenstandsnachführeinrichtung, bei der der Sensor der Figuren 5 und 6 Verwendung findet.

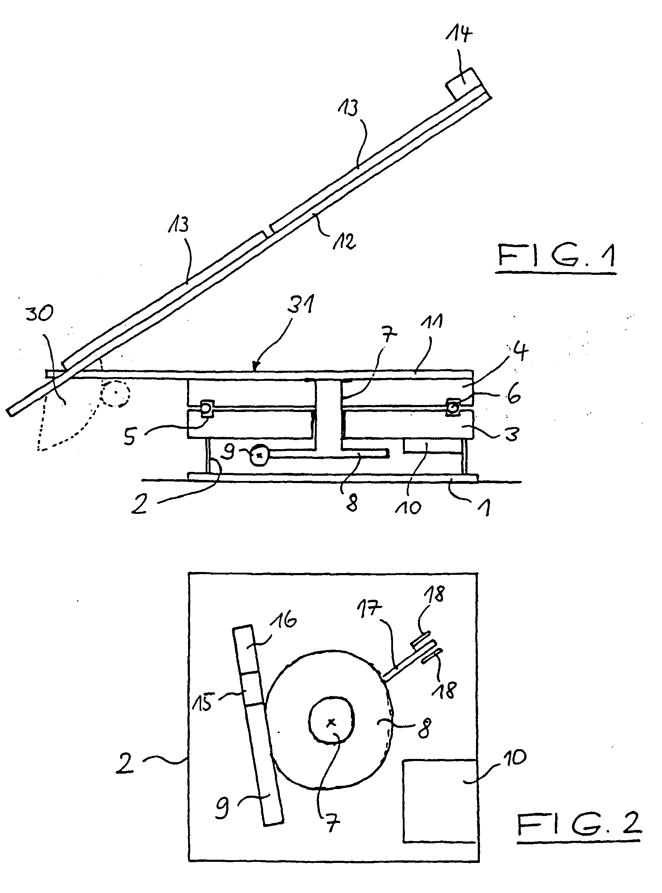

Die in Figur 1 dargestellte selbsttätig wirkende Sonnenstandsnachführeinrichtung für Solarmodule besitzt einen Unterbau, der aus einer Bodenplatte 1, einem Gehäuse 2 und einem auf dem Gehäuse angeordneten Teller 3 besteht. Auf dem Unterbau ist drehbar ein Drehteller 4 gelagert, der ein Schwenkgestell 31 trägt, an dem zwei Solarpaneele 13 befestigt sind. Diese Solarpaneele 13 wandeln Sonnenlicht in elektrischen Strom um, der beispielsweise zur Versorgung eines Fahrzeuges dienen kann, auf dessen Dach die Einrichtung angeordnet ist.

Zur Anbringung der Einrichtung wird die Bodenplatte 1 mit dem Dach des Fahrzeuges verklebt bzw. verschraubt. In Abhängigkeit von den von einem Optosensor 14, der am in der Figur oberen Solarpaneel 13 angeordnet ist, erzeugten Signalen werden ein Drehantrieb zum Drehen des Drehtellers 4 und ein Schwenkantrieb zum Auf- und Zuschwenken des Schwenkgestells 31 betätigt, um einen optimalen Zustand der Solarpaneele 13 zur Sonne (senkrechter Einfall der Sonnenstrahlen auf die Paneelebene) einzustellen.

Im auf der Bodenplatte 1 angeordneten Gehäuse 2 befindet sich der Drehantrieb zum Drehen des Drehtellers 4. Der Drehantrieb umfaßt einen Elektromotor 16, ein Untersetzungsgetriebe 15 und eine Antriebsschnecke 9, die entlang einer Achse angeordnet sind. Die Schnecke 9 kämmt mit einem Antriebszahnrad 8, das fest mit einer Hohlnabe 7 verbunden ist. Die Hohlnabe erstreckt sich durch den fest installierten Teller 3 nach oben und ist mit dem Drehteller 4 fest verbunden. Eine durch die Antriebsschnecke 9 erzeugte Drehung des Antriebszahnrades 8 bewirkt somit eine Drehung des Drehtellers 4. Der Drehteller 4 ist über Kugeln 5 auf dem festen Teller 3 gelagert, wobei die Kugeln in einer Ringnut 6 untergebracht sind, die sich hälftig in beiden Tellern 3, 4 erstreckt.

Die Drehung des Antriebszahnrades 8 wird durch Endschalter 18 begrenzt, mit denen ein Hebel 17 in Kontakt tritt, welcher über einen Dorn in einer Schneckennut geführt ist, die sich an der Unterseite des Antriebszahnrades 8 befindet. Das Antriebszahnrad 8 kann daher von Anschlag zu Anschlag eine Drehung um 370° durchführen.

Ferner ist im Gehäuse 2 ein Kasten 10 angeordnet, der eine Steuereinheit 10 aufnimmt, die den Drehantrieb und den Schwenkantrieb ansteuert und der von den Endschaltern des Drehantriebs und Schwenkantriebs sowie vom Optosensor entsprechende Signale zugeführt werden. Des weiteren steht die Steuereinheit 10 mit einem Bedienungspaneel mit Anzeige in Verbindung. Die entsprechenden elektrischen Leitungen hierfür sind nicht dargestellt.

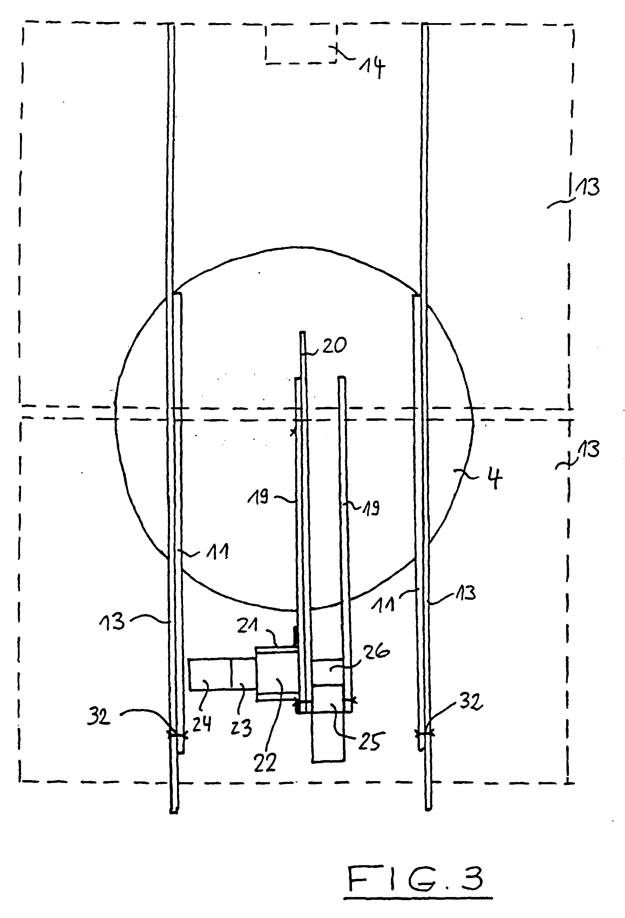

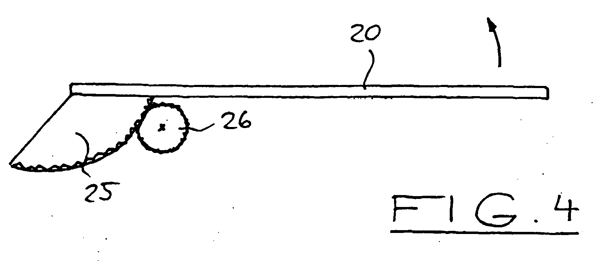

Der Schwenkantrieb zum Auf- und Zuschwenken des Schwenkgestells 31 ist in Figur 1 bei 30 nur schematisch dargestellt. Eine genauere Beschreibung des Schwenkantriebs folgt in Verbindung mit den Figuren 3 und 4.

Wenn ein Signal vom Optosensor 14 der Steuereinheit 10 zugeführt wird, das ein Nachführen der Einrichtung durch eine Drehbewegung des Drehtellers 4 erforderlich macht, wird von der Steuereinheit 10 der Motor 16 angesteuert. Die Motorabtriebswelle wird hierdurch in Drehungen versetzt. Über das Getriebe 15 erfolgt eine entsprechende Untersetzung, so daß die Antriebsschnecke 9 eine wesentlich geringere Drehzahl aufweist. Die Antriebsschnecke 9 treibt das Antriebszahnrad 8 in der ausgewählten Richtung an. Dessen Drehung führt zu einer Drehung des Drehtellers 4 im durch die Ansteuerung der Steuereinheit bzw. die Endschalter 18 festgelegten Ausmaß. Der Drehteller 4 wird so lange hin- und hergedreht, bis er die für den Sonnenstand optimale Drehlage einnimmt.

Figur 3 zeigt eine Draufsicht auf den Drehteller 4, auf dem das Schwenkgestell 31 befestigt ist. Die beiden Solarpaneele 13, die am Drehgestell 31 fixiert sind, sind nur gestrichelt dargestellt.

Das Drehgestell besitzt zwei äußere Schwenkstangen 13, die jeweils mit einer fest mit dem Drehteller 4 verbundenen Stange 11 gelenkig verbunden sind, wie bei 32 gezeigt. Ferner hat das Drehgestell eine dritte, etwa mittig angeordnete Schwenkstange 20, die mit dem Schwenkantrieb verbunden ist und somit verschwenkt wird. Ihre Schwenkbewegung wird über die Solarpaneele 13 auf die beiden äußeren Schwenkstangen 13 übertragen. Die mittlere Schwenkstange 20 ist gelenkig mit zwei fest mit dem Drehteller 4 verbundenen inneren Stangen 19 gelenkig verbunden.

Es sind somit insgesamt sieben Stangen vorgesehen, und zwar drei Schwenkstangen und vier fest installierte Stangen. Die beiden Solarpaneele 13 sind an den drei Schwenkstangen 13 und 20 befestigt.

Die mittlere Schwenkstange 20 ist ferner mit einem Sektorzahnrad 25, das etwa einem Drittelkreis entspricht, verbunden. Dieses Sektorzahnrad 25 und auch die weiteren Teile des Schwenkantriebs ragen nicht über die Oberseiten der Schwenkstangen hinaus, so daß die Solarpaneele den Schwenkantrieb überdecken und sich über die gesamte Länge der Schwenkstangen erstrecken können. Hierdurch stehen im zusammengeklappten Zustand des Schwenkgestells keine Teile über die Stange nach oben vor, und es können Solarpaneele mit möglichst großer Fläche angebracht werden.

Wie in der Detailansicht von Figur 4 gezeigt, kämmt das Sektorzahnrad 25 mit der Verzahnung einer Getriebeabtriebswelle 26 des Schwenkantriebs. Durch Drehen der Welle 26 wird die Stange 20 auf- und zugeschwenkt, wodurch die Solarpaneele in die optimale Stellung relativ zur Sonne gebracht werden. Die Getriebeabtriebswelle 26 erstreckt sich aus einem Untersetzungsgetriebe 22, das über ein weiteres Untersetzungsgetriebe 23 mit einem Antriebsmotor (E-Motor) 24 in Verbindung steht. Der Motor 24, die beiden Untersetzungsgetriebe 23 und 22 und die Getriebeabtriebswelle 26 sind entlang einer Achse angeordnet. Der gesamte Antrieb ist an die feste Stange 19 angeflanscht, wie bei 21 gezeigt. Die Getriebeabtriebswelle ist über geeignete Lagerblöcke (nicht gezeigt) an den beiden festen Stangen 19 gelagert.

Wird der Schwenkmotor 24 von der Steuereinheit 10 angesteuert, wird seine Abtriebswelle in Umdrehungen versetzt. Über die zwei Untersetzungsgetriebe 23 und 22 wird eine Untersetzung von etwa 1:180 erreicht, die in einer reduzierten Drehbewegung der verzahnten Getriebeabtriebswelle 26 resultiert. Diese kämmt mit dem Sektorzahnrad 25 und schwenkt auf diese Weise die Schwenkstange 20 und damit die Solarpaneele 13 in die gewünschte Schwenkstellung. Ein Zurückschwenken erfolgt in umgekehrter Weise. Auch hier sind geeignete Endschalter vorgesehen, die die Schwenkbewegung des Schwenkgestells begrenzen.

Erfindungsgemäß wird somit eine selbsttätig wirkende Sonnenstandsnachführeinrichtung für Solarmodule beschrieben, die infolge ihres mechanischen Antriebs weitgehend wartungsfrei ist und sehr kompakt baut. Es können somit großflächige Solarpaneele angeordnet werden, und die Einrichtung erzeugt nur geringe Windkräfte. Es wird eine niedrige Bauhöhe erzielt. Die Einrichtung ist besonders robust ausgebildet.

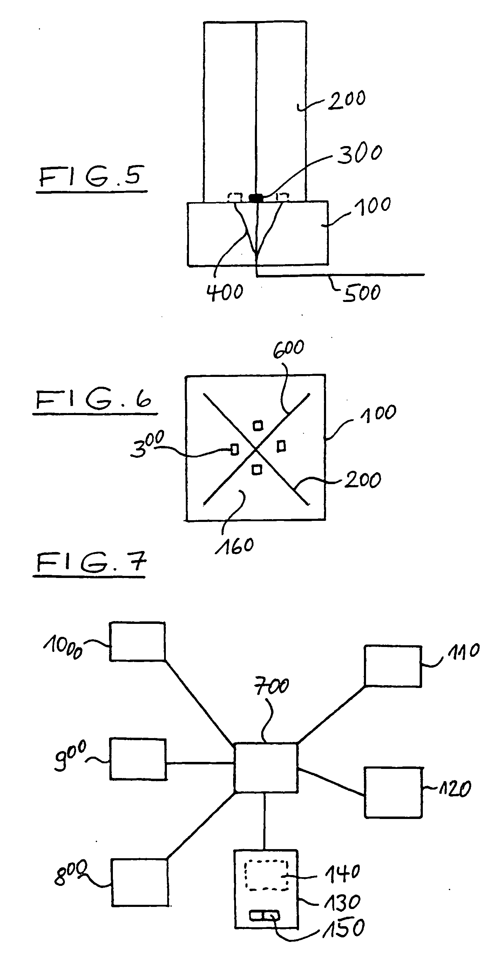

Der in den Figuren 5 und 6 dargestellte Optosensor besitzt einen Unterbau 100, der hier schematisch als entsprechender Sockel dargestellt ist. Dieser Unterbau ist hohl ausgebildet, um entsprechende Verdrahtungen aufzunehmen. Er weist auf seiner Unterseite eine Kabelausführung auf. Der Unterbau ist bei dieser Ausführungsform im Horizontalschnitt etwa quadratisch ausgebildet.

Auf dem Unterbau 100 ist eine Trenneinrichtung 200 angeordnet, die im Horizontalschnitt die Form eines Andreaskreuzes besitzt. Die Trenneinrichtung 200 bildet vier im Horizontalschnitt dreieckförmige Abteile 160, die nach oben und zur Seite hin offen sind. In diese Abteile kann Sonnenlicht somit von oben und von der Seite eindringen. Die beiden anderen Seiten des Dreieckes, die den Unterbaudiagonalen entsprechen, sind von den Wänden 600 der Trenneinrichtung 200 besetzt und schirmen somit das jeweilige Abteil gegenüber Sonnenlicht ab.

In jedem Abteil befindet sich in einem geeigneten Abstand von der Trenneinrichtung 200 eine Lichtempfangseinrichtung 300 in Form einer Photodiode. Bei Bestrahlung mit Sonnenlicht erzeugt die Photodiode 300 elektrische Signale, die über elektrische Leiter 400, welche in einem elektrischen Kabel 500 zusammengefaßt werden, einer geeigneten Steuereinheit zugeführt werden.

Die Trenneinrichtung 200 besitzt eine geeignete Höhe, um bei Schrägstellung der Sonne relativ zur Vertikalachse des Sensors einen Schattenwurf der Trenneinrichtung 200 auf ein oder mehrere Abteile und damit die dort angeordneten Lichtempfangseinrichtungen 300 zu ermöglichen. Die exakte Höhe kann empirisch ermittelt werden.

Figur 7 zeigt den Sensor der Figuren 5 und 6 als Teil einer Sonnenstandsnachführeinrichtung. Der Sensor ist hier bei 800 angedeutet und befindet sich am dreh- und schwenkbeweglich angeordneten Solarmodul. Die entsprechenden Signale des Sensors 800 werden einer Steuereinheit 700 (Zentraleinheit, CPU) zugeführt, die ebenfalls Signale von den Schaltern 900, 1000 des Drehantriebes und Schwenkantriebes empfängt, die empfangenen Signale auswertet und an den Drehantrieb 110 sowie den Schwenkantrieb 120 entsprechende Steuerbefehlssignale abgibt. Ferner führt die Steuereinheit 700 einer Anzeige/Bedienungseinheit 130 Signale zu. Diese Einheit weist ein Anzeigefeld 140 und einen Ein/Ausschalter 150 auf.

Die Gesamteinrichtung funktioniert wie folgt:

Der Benutzer schaltet die Einrichtung mit dem Schalter 150 ein. Der Sensor 800 erfaßt den Sonnenstand und führt der Steuereinheit 700 entsprechende Signale zu. Diese Signale werden im Anzeigefeld 140 angezeigt. Ferner werden hierdurch, falls erforderlich, entsprechende Befehlssignale erzeugt, die dem Drehantrieb 110 und/oder Schwenkantrieb 120 zugeführt werden, welche eine Nachführung des Solarmoduls bewirken. Die vorgesehenen Endsschalter 900, 1000 beenden die entsprechenden Bewegungen des Solarmoduls.

## Patentansprüche

1. Selbsttätig wirkende Sonnenstandsnachführeinrichtung für Solarmodule mit
einem Unterbau (1, 2, 3) zur Befestigung der Einrichtung an einem stationären oder beweglichen Teil, insbesondere Fahrzeug;
einem auf dem Unterbau (1, 2, 3) drehbar gelagerten und über einen Drehantrieb angetriebenen Drehelement;
einem am Drehelement aufschwenkbar gelagerten und über eine einen Motor (24) aufweisenden Schwenkantrieb (30) angetriebenen Schwenkgestell (31), an dem mindestens ein Solarmodul (13) gelagert ist; und
einem Optosensor (14), der in Abhängigkeit vom Stand der Sonne Signale erzeugt und einer Steuereinheit (10) zuführt, die den Dreh- und/oder Schwenkantrieb (30) ansteuert;
wobei das Schwenkgestell (31) mindestens ein fest mit dem Drehelement verbundenes Element (19) und mindestens ein hieran verschwenkbar gelagertes, den Solarmodul (13) tragendes Schwenkelement (20) aufweist,
**dadurch gekennzeichnet, daß**
das Drehelement als Drehteller (4) ausgebildet ist,
das Schwenkgestell (31) auf dem Drehteller (4) angeordnet ist,
das Schwenkgestell (31) mindestens zwei fest mit dem Drehteller (4) verbundene stangen- oder plattenförmige Elemente (19) aufweist, zwischen denen das mindestens eine Schwenkelement (20) aufschwenkbar gelagert ist, und
der Schwenkantrieb (30) im Endbereich eines der fest mit dem Drehteller (4) verbundenen Elemente (19) quer zu dessen Achse gelagert ist und das Element (19) nach oben nicht überragt sowie ein Untersetzungsgetriebe (22,23) und eine mit einer Verzahnung versehene Getriebeabtriebswelle (26) zwischen den beiden Elementen (19) aufweist, mit der ein mit dem Schwenkelement (20) des Schwenkgestells (31) verbundenes Sektorzahnrad (25) kämmt.

2. Sonnenstandsnachführeinrichtung nach Anspruch 1, **dadurch gekennzeichnet, daß** das Sektorzahnrad (25) einen Bogen von etwa 120° überspannt.

3. Sonnenstandsnachführeinrichtung nach einem der vorangehenden Ansprüche, **dadurch gekennzeichnet, daß** sie insgesamt vier fest mit dem Drehteller (4) verbundene Elemente (11, 19) aufweist, von denen die beiden äußeren (11) jeweils schwenkbar mit einem Schwenkelement (13) und die beiden inneren (19) mit dem das Sektorzahnrad (25) aufweisenden Schwenkelement (20) verbunden sind.

4. Sonnenstandsnachführeinrichtung nach einem der vorangehenden Ansprüche, **dadurch gekennzeichnet, daß** die fest verbundenen Elemente (11, 19) und Schwenkelemente (13, 20) Stangen sind.

5. Sonnenstandsnachführeinrichtung nach einem der vorangehenden Ansprüche, **dadurch gekennzeichnet, daß** der Drehteller (4) mittles in einer Ringnut (5) angeordneten Kugeln (6) auf dem Unterbau (1, 2, 3) drehbar gelagert ist.

6. Sonnenstandsnachführeinrichtung nach einem der vorangehenden Ansprüche, **dadurch gekennzeichnet, daß** sich der Unterbau (1, 2, 3) aus einer Bodenplatte (1), einem darauf angeordneten Gehäuse (2) und einem darauf angeordneten festen Teller (3) zur Lagerung des Drehtellers (4) zusammensetzt.

7. Sonnenstandsnachführeinrichtung nach einem der vorangehenden Ansprüche, **dadurch gekennzeichnet, daß** der Drehantrieb einen Motor (16), ein Untersetzungsgetriebe (15) und eine Antriebsschnecke (9) aufweist, die mit einem Antriebszahnrad (8) für den Drehteller (4) kämmt.

8. Sonnenstandsnachführeinrichtung nach einem der vorangehenden Ansprüche, **dadurch gekennzeichnet, daß** der Drehantrieb und die Steuereinheit (10) im Gehäuse (2) des Unterbaus angeordnet sind.

9. Sonnenstandsnachführeinrichtung nach einem der vorangehenden Ansprüche, **dadurch gekennzeichnet, daß** der Optosensor (14)
einen Unterbau (100),
eine auf dem Unterbau (100) angeordnete Trenneinrichtung (200), die den Raum über dem Unterbau (100) in mehrere oben und seitlich offene Abteile (160) unterteilt,
mindestens eine Lichtempfangseinrichtung (300) in jedem Abteil (160), die Licht in elektrischen Strom umwandelt, und
an die Lichtempfangseinrichtung (300) angeschlossene und zu einer Steuer/Aüswerte/Anzeigeeinheit (700) führende elektrische Leitungen (400, 500) aufweist.

10. Sonnenstandsnachführeinrichtung nach Anspruch 9, **dadurch gekennzeichnet, daß** die Trenneinrichtung (200) den Raum über dem Unterbau (100) in vier Abteile (160) unterteilt.

11. Sonnenstandsnachführeinrichtung nach Anspruch 9 oder 10, **dadurch gekennzeichnet, daß** in jedem Abteil (160) eine Lichtempfangseinrichtung (300) angeordnet ist.

12. Sonnenstandsnachführeinrichtung nach einem der Ansprüche 9 bis 11, **dadurch gekennzeichnet, daß** die Lichtempfangseinrichtung (300) eine Photodiode ist.

13. Sonnenstandsnachführeinrichtung nach einem der Ansprüche 9 bis 12, **dadurch gekennzeichnet, daß** er einen im Horizontalschnitt etwa quadratischen Unterbau (100) und eine Trenneinrichtung (200) mit entlang den Diagonalen des Unterbaus (200) angeordneten Wänden besitzt.

14. Sonnenstandsnachführeinrichtung nach einem der Ansprüche 9 bis 13, **dadurch gekennzeichnet, daß** er an einem dreh- und schwenkbeweglich angeordneten Solarpaneel (13) vorgesehen ist.

## Claims

1. An automatically operating sun position follow-up means for solar modules comprising
a base (1, 2, 3) for fastening the means at a stationary or movable part, especially a vehicle;
a rotary member rotationally supported on the base (1, 2, 3) and driven by rotary drive;
a pivot frame (31) pivotally supported at the rotary member and driven by means of a pivot drive (30) having a motor (24), said pivot frame (31) having supported thereat at least one solar module (13); and
an optosensor (14) which generates signals in response to the position of the sun and supplies the same to a control unit (10) which controls the rotary drive and/or the pivot drive (30);
wherein the pivot frame (31) includes at least one member (19) fixedly connected to the rotary member and at least one pivot member (20) pivotally supported at said member (19) and carrying the solar module (13),
**characterized in that**
the rotary member is formed as rotary plate (4),
the pivot frame (31) is disposed on the rotary plate (4),
the pivot frame (31) includes at least two rod-like or plate-like members (19) fixedly connected to the rotary plate (4) and having pivotally supported therebetween the at least one pivot member (20), and
the pivot drive (30) is supported in the end portion of one of the members (19) which are fixedly connected to the rotary plate (4) transversely with respect to the axis thereof and does not protrude the member (19) upwardly and includes a reducing transmission (22, 23) and a transmission output shaft (26) provided with a toothing between the two members (19), a sector gear (25) connected to the pivot member (20) of the pivot frame (31) engaging the transmission output shaft.

2. The sun position follow-up means according to claim 1, **characterized in that** the sector gear (25) covers an arc of about 120°.

3. The sun position follow-up means according to one of the preceding claims, **characterized in that** it includes on the whole four members (11, 19) fixedly connected to the rotary plate (4) of which the two outer ones (11) are pivotally connected to a pivot member (13) and the two inner ones (19) are connected to the pivot member (20) including the sector gear (25).

4. The sun position follow-up means according to one of the preceding claims, **characterized in that** the fixedly connected members (11, 19) and pivot members (13, 20) are rods.

5. The sun position follow-up means according to one of the preceding claims, **characterized in that** the rotary plate (4) is rotatably supported on the base (1, 2, 3) by means of balls (6) arranged within an angular groove (5).

6. The sun position follow-up means according to one of the preceding claims, **characterized in that** the base (1, 2, 3) consists of a bottom plate (1), a housing (2) arranged thereon and a fixed plate (3) arranged thereon for the support of the rotary plate (4).

7. The sun position follow-up means according to one of the preceding claims, **characterized in that** the rotary drive has a motor (16), a reducing transmission (15) and a drive screw (9) which is in engagement with a drive gear (8) for the rotary plate (4).

8. The sun position follow-up means according to one of the preceding claims, **characterized in that** the rotary drive and the control unit (10) are arranged in the housing (2) of the base.

9. The sun position follow-up means according to one of the preceding claims, **characterized in that** the optosensor (14) includes
a base (100),
a separation means (200) arranged on the base (100) and dividing the space above the base (100) into a plurality of upwardly and laterally open compartments (160),
at least one light receiving means (300) in every compartment (160) which converts light into electrical current, and
electrical lines (400, 500) connected to the light receiving means (300) and extending to a control/evaluating/indicating unit (700).

10. The sun position follow-up means according to claim 9, **characterized in that** the separation means (200) divides the space above the base (100) into four compartments (160).

11. The sun position follow-up means according to claim 9 or 10, **characterized in that** a light receiving means (300) is arranged in every compartment (160).

12. The sun position follow-up means according to one of the claims 9 to 11, **characterized in that** the light receiving means (300) is a photodiode.

13. The sun position follow-up means according to one of the claims 9 to 12, **characterized in that** it includes a base (100) approximately square in horizontal section and a separation means (200) with walls arranged along the diagonals of the base (200).

14. The sun position follow-up means according to one of the claims 9 to 13, **characterized in that** it is provided at a solar panel (13) which is rotatably and pivotally arranged.

## Revendications

1. Dispositif d'orientation automatique suivant la position du soleil pour un module solaire comprenant
- une base (1, 2, 3) pour la fixation du dispositif à une pièce stationnaire ou mobile, en particulier un véhicule,
- un élément rotatif placé de manière rotative sur la base (1, 2, 3) et entraîné par un entraînement rotatif,
- un support de pivotement placé de manière pivotante vers le haut sur l'élément rotatif et entraîné par un entraînement pivotant présentant un moteur (24), sur lequel support au moins un module solaire (13) est placé, et
- un capteur optique (14) qui produit des signaux en fonction de la position du soleil et les transmet à une unité de commande (10) qui ajuste l'entraînement rotatif et / ou pivotant (30),
- dans lequel le support de pivotement (31) présente au moins un élément (19) relié fixement à l'élément rotatif et au moins un élément pivotant (20) placé dessus de manière pivotante, portant le module solaire (13),
**caractérisé en ce que**
l'élément rotatif est configuré comme un plateau tournant (4)
le support de pivotement (31) est disposé sur le plateau tournant (4),
le support de pivotement (31) présente au moins deux éléments en forme de barre ou de plaque reliés fixement au plateau tournant (4) entre lesquels ledit au moins un élément pivotant (20) est placé de manière à pivoter vers le haut, et
l'entraînement pivotant (30) est placé dans la région terminale d'un des éléments (19) reliés fixement au plateau tournant (4) transversalement à son axe et l'élément (19) ne fait pas saillie vers le haut et présente un démultiplicateur (22, 23) et un arbre mené (26) d'engrenage pourvu d'une denture entre les deux éléments (19) avec lequel entre en prise une roue dentée sectorielle (25) reliée à l'élément pivotant (20) du support de pivotement (31).

2. Dispositif d'orientation suivant la position du soleil selon la revendication 1, **caractérisé en ce que** la roue dentée sectorielle (25) couvre un arc de cercle d'environ 120°.

3. Dispositif d'orientation suivant la position du soleil selon une des revendications précédentes, **caractérisé en ce qu'**il présente au total quatre éléments (11, 19) fixement reliés au plateau tournant (4) dont les deux extérieurs (11) sont respectivement reliés de manière pivotante à un élément pivotant (13) et les deux intérieurs (19) sont reliés à l'élément pivotant (20) présentant la roue dentée sectorielle (25).

4. Dispositif d'orientation suivant la position du soleil selon une des revendications précédentes, **caractérisé en ce que** les éléments (11, 19) et les éléments pivotants (13, 20) fixement reliés sont des barres.

5. Dispositif d'orientation suivant la position du soleil selon une des revendications précédentes, **caractérisé en ce que** le plateau tournant (4) est monté de manière rotative sur la base (1, 2, 3) au moyen de billes (6) disposées dans une rainure annulaire (5).

6. Dispositif d'orientation suivant la position du soleil selon une des revendications précédentes, **caractérisé en ce que** la base (1, 2, 3) se compose d'une plaque de fond (1), d'un logement (2) disposé sur celle-ci et d'un plateau fixe (3) disposé sur celui-ci et destiné au placement du plateau rotatif (4).

7. Dispositif d'orientation suivant la position du soleil selon une des revendications précédentes, **caractérisé en ce que** l'entraînement rotatif présente un moteur (16), un démultiplicateur (15) et une vis d'entraînement sans fin (9) qui entre en prise avec une roue dentée d'entraînement (8) pour le plateau tournant (4).

8. Dispositif d'orientation suivant la position du soleil selon une des revendications précédentes, **caractérisé en ce que** l'entraînement rotatif et l'unité de commande (10) sont disposés dans le logement (2) de la base.

9. Dispositif d'orientation suivant la position du soleil selon une des revendications précédentes, **caractérisé en ce que** le capteur optique (14) présente
une base (100)
un dispositif séparateur (200) disposé sur la base qui divise l'espace au-dessus de la base (100) en plusieurs compartiments (160) ouverts sur le dessus et sur le côté,
au moins un dispositif de réception de la lumière (300) dans chaque compartiment (160) qui convertit la lumière en courant électrique, et
des conduites électriques (400, 500) raccordées au dispositif de réception de la lumière (300) et conduisant à une unité de commande / d'évaluation / d'affichage (700).

10. Dispositif d'orientation suivant la position du soleil selon la revendication 9, **caractérisé en ce que** le dispositif séparateur (200) divise l'espace au-dessus de la base (100) en quatre compartiments (160).

11. Dispositif d'orientation suivant la position du soleil selon la revendication 9, **caractérisé en ce qu'**un dispositif de réception de la lumière (300) est disposé dans chaque compartiment (160).

12. Dispositif d'orientation suivant la position du soleil selon une des revendications 9 à 11, **caractérisé en ce que** le dispositif de réception de la lumière (300) est une photodiode.

13. Dispositif d'orientation suivant la position du soleil selon une des revendications 9 à 12, **caractérisé en ce qu'**il a une base (100) approximativement quadratique en coupe horizontale et un dispositif séparateur (200 avec des parois disposées le long des diagonales de la base (200).

14. Dispositif d'orientation suivant la position du soleil selon une des revendications 9 à 13, **caractérisé en ce qu'**il est prévu sur un panneau solaire disposé de manière à tourner et à pivoter.
